(19) Europäisches Patentamt / European Patent Office / Office européen des brevets

(11) **EP 3 747 119 B1**

(12) **EUROPEAN PATENT SPECIFICATION**

(45) Date of publication and mention
of the grant of the patent:
**09.03.2022  Bulletin 2022/10**

(21) Application number: **19702402.9**

(22) Date of filing: **29.01.2019**

(51) International Patent Classification (IPC):
*H02M 7/5387* (2007.01)   *H02M 1/00* (2006.01)
*H02K 1/24* (2006.01)   *H02P 6/18* (2016.01)
*H02K 1/27* (2022.01)   *H02K 3/47* (2006.01)

(52) Cooperative Patent Classification (CPC):
**H02M 7/5387; H02K 1/246; H02K 1/278;
H02K 3/47; H02K 19/10; H02P 6/183; H02P 6/186;**
H02M 1/0003

(86) International application number:
**PCT/EP2019/052058**

(87) International publication number:
**WO 2019/149675 (08.08.2019 Gazette 2019/32)**

(54) **SLOTLESS SYNCHRONOUS PERMANENT MAGNET MOTOR**

NUTENLOSER SYNCHRONER DAUERMAGNETMOTOR

MOTEUR SYNCHRONE À AIMANT PERMANENT SANS ENCOCHE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **31.01.2018   SE 1830033**

(43) Date of publication of application:
**09.12.2020   Bulletin 2020/50**

(73) Proprietor: **Atlas Copco Industrial Technique AB
105 23 Stockholm (SE)**

(72) Inventor: **MILLINGER, Jonas, Gustav
120 53 ÅRSTA (SE)**

(74) Representative: **Hagström, Åsa Charlotta
Atlas Copco Industrial Technique AB
IP Department
105 23 Stockholm (SE)**

(56) References cited:
**EP-A1- 1 376 849       EP-A1- 2 571 142
EP-A2- 2 221 945       US-A1- 2005 146 306
US-A1- 2014 327 379    US-A1- 2016 105 064**

## Description

## TECHNICAL FIELD

The present disclosure generally relates to synchronous motors. In particular, it relates to slotless synchronous permanent magnet motors.

## BACKGROUND

Slotless permanent magnet motors are usually preferred in applications with high power density requirements, such as in industrial assembly and percussive tools. Applications of this type require advanced motor control, which is typically achieved by means of a power converter connected to the motor and operated by means of pulse width modulation (PWM).

For the applications identified above a commutation transducer, or angle encoder, for rotor position detection feedback inside the speed control loop of the drive circuit is often utilised. A drawback of using a transducer is an increased complexity and size of the motor module.

The paper "Sensorless Estimation of Rotor Position of Cylindrical Brushless DC Motors Using Eddy Currents" by Tomita et al, Proceedings of 4th IEEE International Workshop on Advanced Motion Control - AMC '96 -MIE, March 1996, Vol. 1, pp. 24-28 discloses a motor structure with a slotted stator core. Non-magnetic material is pasted on the rotor surface to flow eddy currents.

Increasing the rotor saliency by mounting rotor bars and connection elements made of conductive, non-magnetic materials to the rotor of an interior permanent magnet synchronous machine, in order to improve sensorless motor control, is described in US2016105064. Furthermore, EP2571142 proposes to enclose the permanent magnet embedded rotor of a synchronous machine by a cylindrical body that is externally inserted on the rotor core and made of a non-magnetic metal with good electrical conductivity.

A common method for sensorless rotor position detection of slotted machines involves the use of a salient pole rotor design. The rotor position can be detected by signal processing of the harmonic phase currents. In contrast to their slotted counterparts, salient rotor design of slotless motors requires removal of active permanent-magnet material, resulting in reduced motor performance.

In view of the above, an object of the present disclosure is to provide a slotless synchronous permanent magnet motor which solves or at least mitigates the above-indicated problems.

This object is solved by the features of device claim 1, system claim 6 and method claim 14. The dependent claims recite advantageous embodiments of the invention.

There is hence according to a first aspect of the present disclosure provided a slotless synchronous permanent magnet, PM, motor comprising the features of device claim 1.

Electrically conductive materials such as copper and aluminium behave like air from a magnetic perspective at low frequencies, but reflect high frequency magnetic flux according to Lenz's law. The reflection becomes significant for skin depths $\delta$ smaller than the thickness of the conductive layer h. Due to the rotor being provided with the first metal layer, high frequency saliency of the rotor may be obtained. Hence, by means of the present design, rotor position detection may be achieved based on salient rotor behaviour for high switching frequencies of the switches of a power converter configured to control the slotless synchronous PM motor. In particular, rotor position detection with minimal impact on motor performance may be provided.

Furthermore, since no sensor is required to determine the rotor position, the slotless synchronous PM motor may be made shorter, cheaper and more reliable.

In relation to the slotted configuration disclosed in the paper by Tomita et al, a configuration with a first conductive layer provided on the rotor of a slotless synchronous PM motor is surprisingly much more precise with regards to rotor position determination. According to the paper by Tomita, the rotor position estimation has a maximum error of 26°, which is not useful for many control schemes, whereas in the case of a slotless synchronous PM motors, the precision may be below $\pm 5°$, down to $\pm 2°$. Additionally, for slotted motors, the rotor position estimation is dependent of the motor load, whereas it is independent of the motor load for slotless synchronous PM motors. Hence, the proposed slotless synchronous PM motor configuration is much more useful for rotor position determination. For example, motor control involving sinusoidal commutation may be used instead of six step commutation as would have to be the case in Tomita, whereby torque ripple can be eliminated and smooth motion and precise motor control can be provided.

With "rotor position" is generally meant the electric rotor position. The rotor position may for example be a rotor angle between a stationary frame such as the $\alpha\beta$-frame and a rotor reference frame such as the d-q frame.

With harmonic rotor saliency is meant rotor saliency for harmonics with respect to the fundamental frequency. The fundamental frequency is the number of rotor revolutions per second.

The first metal layer may be a first metal sheet or a first metal coating layer.

The external surface of the first metal layer may be flush or essentially flush with the outer surface of the rotor.

The first metal layer may be made of a weakly magnetic material such as a paramagnetic or a diamagnetic material.

According to one embodiment the first metal layer is made of copper or aluminium. The first metal layer may for example consist of copper or aluminium.

The first metal layer could alternatively be made of a conductive alloy. The stator may be provided with a plurality of windings, i.e. stator phase windings, each winding being configured to be connected to a respective electrical phase. In particular, each winding has two winding portions. The winding portions of a winding are connected to a respective terminal of the power converter. The terminals connected to a winding are associated with the same electrical phase.

According to the aspect defined in claim 1, the rotor is provided with a second conductive metal layer configured to create harmonic rotor saliency.

The second metal layer may be a second metal sheet or a second metal coating layer.

The external surface second metal layer may be flush or essentially flush with the outer surface of the rotor. The second metal layer may be made of a weakly magnetic material such as a paramagnetic or a diamagnetic material.

The second metal layer may be made of copper or aluminium. The second metal layer may for example consist of copper or aluminium. The second metal layer could alternatively be made of a conductive alloy.

The first metal layer and the second metal layer are configured so that the first metal layer and the second metal layer simultaneously can align with a respective winding portion of an electrical phase.

The first conductive metal layer and the second metal layer are electrically connected. The first conductive metal layer and the second conductive metal layer are connected to each other at each end portion or end of the rotor in the axial direction. The first conductive metal layer and the second conductive metal layer are hence connected and short-circuited in two locations, one at each end portion or end of the rotor. The current induced in the first conductive metal layer and the second conductive metal layer will thereby flow in opposite directions with respect to each other, and the current will hence obtain a return path. The levels of induced current will thereby increase when subjected to d-axis oriented current and hence higher rotor saliency will be obtained. Hence a stronger saliency indication with higher signal to noise ratio may be obtained. The estimation of the rotor position may thereby be made more precise.

In cross-section of the rotor the first metal layer is provided peripherally on the rotor, forming the arc of a first circle sector.

In cross-section of the rotor the second metal layer is provided peripherally on the rotor, forming the arc of a second circle sector, the centre of the arc of the second circle sector being at an angle with respect to the centre of the arc of the first circle sector.

According to one embodiment the angle is about 180°. With about 180° angle is meant a range of 180° ± 20°, for example a range of 180° ± 10°. The angle could alternatively be 180°.

According to one embodiment the first metal layer is arranged between magnet segments of the rotor to form a first central plane of the rotor, and the second metal layer is arranged between magnet segments of the rotor to form a second central plane of the rotor, perpendicular to the first central plane.

According to one embodiment the first metal layer extends along a majority of the axial length of the rotor. The first metal layer may in particular form a contiguous structure from one short end thereof to the opposite short end.

The second metal layer may extend along a majority of the axial length of the rotor. The second metal layer may in particular form a contiguous structure from one short end thereof to the opposite short end.

There is according to a second aspect of the present disclosure provided a slotless synchronous PM motor system comprising the features of system claim 6.

Each current sensor may be configured to measure current in a respective electrical phase. The current sensors may in particular be configured to measure the current in a respective winding of the stator. The number of currents measured may thus typically be the same as the number of electrical phases of the slotless synchronous PM motor.

The current measured by the current sensors may in some embodiments be a current ripple. In this case, the control system is configured to determine the rotor position based on the current ripple.

The current ripple may be commutation-induced current ripple. Commutation occurs when the polarity changes in an electrical phase.

The power converter may comprise wide bandgap semiconductor switches, for example wide bandgap transistors.

According to one embodiment the power converter is configured to inject current to the slotless synchronous PM motor using a switching frequency of switches of the power converter sufficiently high for the skin depth $\delta$ in the first metal layer to be less than the thickness h of the first metal layer, the skin depth being defined by

$$\delta = \sqrt{\frac{2\rho}{\mu\pi f}}$$

where $\rho$ is the resistivity of the first metal layer, $\mu$ is the permeability of the first metal layer, and f is the switching frequency.

When the rotor is provided with more than one metal layer, the above considerations concerning skin depth and thickness apply to all of the metal layers, e.g. also to a second metal layer.

The slotless synchronous PM motor system may utilise a high switching frequency, enabling the use of thin first/second metal layer(s), thus resulting in minimal impairment on motor performance.

The switching frequency may for example be in the order of 100 kHz.

According to one embodiment the injected voltage may comprise a high frequency voltage component such as a high frequency sinusoidal voltage component. The high frequency component may be specifically injected for the purpose of rotor position determination. The high frequency component may have an angular frequency that is higher than the maximum angular frequency of the slotless synchronous PM motor.

According to one embodiment the control system is configured to determine an inductance for each electric phase based on a current ripple of the measured current, and wherein the control system is configured to determine the rotor position based on the inductances.

The inductance for each phase may for example be determined by the inclination or derivative $\frac{dI}{dt}$ of the current ripple between commutations, from which the inductance L for an electrical phase may be obtained by $\mathbb{L}=U/\frac{dI}{dt}$, where U is the phase voltage.

According to one embodiment the rotor position is determined by comparing the inductances with reference inductances associated with specific rotor positions in a look-up table. In particular, the combination of the inductances, and in particular the matching reference inductances, provide a single rotor position value in the look-up table.

According to one embodiment the current sensors are configured to oversample a current ripple of the measured current. Oversampling is to be construed as a sampling frequency which is higher than the Nyquist frequency.

According to one embodiment the stator has a plurality of stator phase windings, and wherein the control system is configured to compensate for a geometric asymmetry of the stator phase windings.

The geometric asymmetry of the stator phase windings, i.e. displacement of one or more of the stator phase windings in the circumferential direction of the stator such that symmetry along a radial plane is non-perfect due to non-ideal manufacturing has proved to influence the estimation of the rotor position according to research conducted by the present inventor. In particular, the estimation error is increased by geometric asymmetry. By compensating for the geometric asymmetry, the estimation/determination of the rotor position may be made more precise.

According to one embodiment the control system comprises a first transformation block configured to perform the compensation by utilising a transformation of voltage references for the power converter from a rotor reference frame to a three-phase frame, the transformation taking displacement of the stator phase windings in the circumferential direction of the stator, defining the geometric asymmetry, into account.

In particular, the angular displacement of each stator phase winding may be used in the transformation to provide the compensation. The transformation may for example be a linear operator such as a matrix, for transforming between the rotor reference frame and the abc-frame, or the stator reference frame and the abc-frame.

According to one embodiment the control system includes a second transformation block configured to transform the current measured by the current sensors to obtain a d-axis current and a q-axis current, a demodulator block configured to demodulate the q-axis current, and an estimator block including a PI-observer, configured to use feed-forward of the demodulated q-axis current, for determining the rotor position.

Transient behaviour will thereby be improved. In particular, in the event of a transient, steady state with very low estimation error can quickly be obtained. There is according to a third aspect of the present disclosure provided a method of determining a rotor position of rotor of a slotless synchronous PM motor according to method claim 14.

According to one embodiment the controlling involves using a switching frequency of switches of the power converter sufficiently high for the skin depth $\delta$ in the first metal layer to be less than the thickness h of the first metal layer, the skin depth being defined by

$$\delta = \sqrt{\frac{2\rho}{\mu\pi f}}$$

where $\rho$ is the resistivity of the first metal layer, $\mu$ is the permeability of the first metal layer, and f is the switching frequency.

According to one embodiment the stator has a plurality of stator phase windings, and wherein step a) involves compensating for a geometric asymmetry of the stator phase windings.

According to one embodiment the compensating involves utilising a transformation of voltage references for the power converter from a rotor reference frame to a three-phase frame, the transformation taking displacement of the stator phase windings in the circumferential direction of the stator, defining the geometric asymmetry, into account.

According to one embodiment the determining involves transforming the measured current to obtain a d-axis current and a q-axis current, demodulating the q-axis current, and utilising an estimator block including a PI-observer, using feed-forward of the demodulated q-axis current.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc.", unless explicitly stated otherwise.

## BRIEF DESCRIPTION OF THE DRAWINGS

The specific embodiments of the inventive concept will now be described, by way of example, with reference to the accompanying drawings, in which:

Fig. 1a schematically shows a cross-section of an example of a slotless synchronous PM motor;

Fig. 1b schematically shows a cross-section of the rotor of the slotless synchronous PM motor in Fig. 1a;

Fig. 2 schematically shows a cross-section of another example of a slotless synchronous PM motor;

Fig. 3 schematically shows a cross-section of a comparative example of a slotless synchronous PM motor;

Fig. 4 schematically shows a block diagram of a slotless synchronous PM motor system;

Fig. 5 is a flowchart of a method of determining the rotor position of a rotor of a slotless synchronous PM motor; and

Fig. 6 schematically depicts an example of an alternative control scheme for controlling the slotless synchronous PM.

## DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

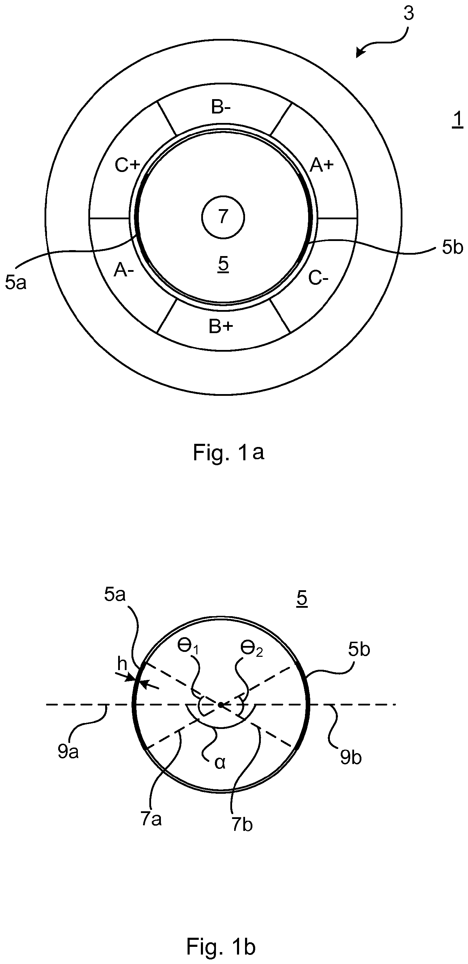

Fig. 1 shows an example of a slotless synchronous PM motor. The slotless synchronous PM motor 1 includes a stator 3 and a rotor 5 configured to electromagnetically interact with the stator 3. The rotor 5 is a permanent magnet rotor. The stator 3 has a plurality of windings i.e. stator phase windings, each being connected to a respective electrical phase A, B and C. In the present example, the windings are connected such that winding portions of the same electric phase are arranged opposite to each other in a cross-section of the slotless synchronous PM motor 1. Thus, the two winding portions of electrical phase A, denoted by A+ and A- are arranged opposite to each other, the two winding portions of electrical phase B, denoted by B+ and B- are arranged opposite to each other, and the two winding portion of electrical phase C, denoted by C+ and C-, are arranged opposite to each other.

In case of a geometric asymmetry of the stator phase windings, the winding portions will not be exactly opposite to each other. There may in particular be a small displacement in the circumferential direction of the stator 3 between opposing winding parts of an electrical phase. This may lead to an error in the estimation/determination of the rotor position. According to some examples, compensation may be provided with regards to this geometric asymmetry, as will be described further below.

The slotless synchronous PM motor 1 comprises a rotor shaft 7 and the rotor 5 is arranged around the rotor shaft 6. The rotor 5 is rotatably arranged in the stator 3.

The rotor 5 has an electrically conductive first metal layer 5a and an electrically conductive second metal layer 5b. The first metal layer 5a and the second metal layer 5b create harmonic rotor saliency, as will be explained in the following. The first metal layer 5a forms part of the external surface of the rotor 5. The second metal layer 5b forms part of the external surface of the rotor 5. The first metal layer 5a extends along a majority of the axial length of the rotor 5. The first metal layer 5a is non-segmented, i.e. it is a single-piece contiguous structure. The second metal layer 5b extends along a majority of the axial length of the rotor 5. The second metal layer 5b is non-segmented, i.e. it is a single-piece contiguous structure. In general, the first metal layer 5a and the second metal layer 5b may be identical or essentially identical to each other.

The first metal layer 5a may be a first metal sheet or coating. The second metal layer 5b may be a second metal sheet or coating.

The first metal layer 5a and the second metal layer 5b may according to one variation be electrically connected to each other. The first metal layer 5a and the second metal layer 5b may be short-circuited. Hereto, the first metal layer 5a and the second metal layer 5b may be electrically connected to each other by means of one or more low-resistive connection(s). Typically, the first metal layer 5a and the second metal layer 5b are connected to each other at each end or end region/portion in the axial direction of the rotor 5. The one or more low-resistive connections may for example be made of the same material as the first metal layer 5a and/or the second metal layer 5b.

Fig. 1b depicts the rotor 5 in more detail. The first metal layer 5a extends in the circumferential direction peripherally along the rotor 5. The first metal layer 5a has a thickness h. The first metal layer 5a forms an arc of a first circle sector 7a of the rotor 5, having a first central angle $\theta_1$. The second metal layer 5b extends in the circumferential direction peripherally along the rotor 5. The second metal layer 5b forms an arc of a second circle sector 7b of the rotor 5, having a second central angle $\theta_2$. The first circle sector 7a and the second circle sector 7b are mutually disjoint. The first metal layer 5a and the second metal layer 5b are hence arranged along disjoint portions of the periphery of the rotor 5. For example, the centre 9a of the arc of the first circle sector 7a and the centre 9b of the second circle sector 7b may be at an angle $\alpha$ of about 180 degrees. The first metal layer 5a and the second metal layer 5b may hence be arranged oppositely in cross-section of the rotor 5.

The first central angle $\theta 1$ and the second central angle $\theta 2$ may typically be determined by the winding configuration of the slotless synchronous PM motor 1. For instance, for a two-pole configuration the first central angle $\theta 1$ and the second central angle $\theta 2$ may each be determined to be essentially equal to, equal to or larger than $2\pi$/(the number of electrical phases times two), with the number of metal layers being equal to the number of poles. In the example in Fig. 1a, this would mean that the first central angle $\theta 1$ and the second central angle $\theta 2$ would each be equal to or greater than $60°$, i.e. $360°/6$.

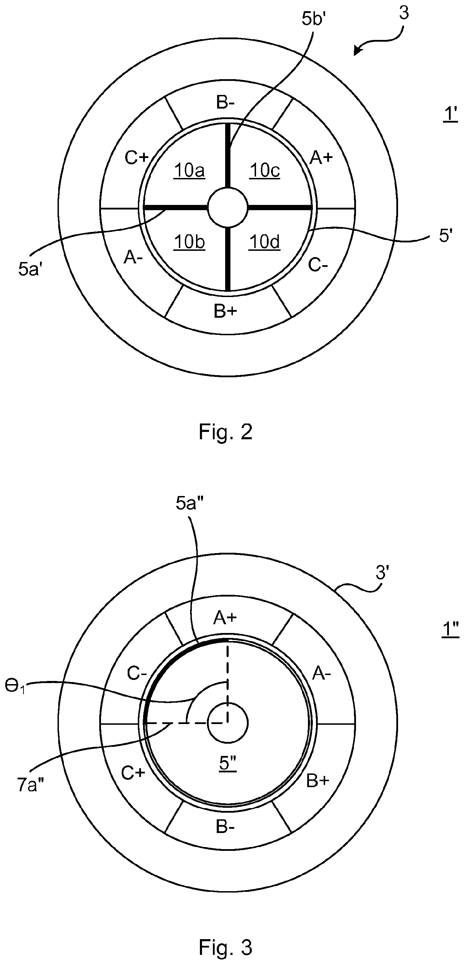

Fig. 2 shows another example of a slotless synchronous PM motor. Slotless synchronous PM motor 1' is similar to the example described with reference to Figs 1a and 1b. The rotor 5' however differs somewhat from the rotor 5. Rotor 5' has a first metal layer 5a' and a second metal layer 5b', which provide harmonic rotor saliency. The first metal layer 5a' is provided between magnet segments 10a-10d and forms a first central plane extending through the rotor 5', dividing the rotor 5' into two halves in cross-section of the rotor 5'. The first metal layer 5a' hence extends radially through the rotor 5'. The second metal layer 5b' is provided between magnet segments 10a-10d and forms a second central plane extending through the rotor 5'a, dividing the rotor 5' into two halves in cross-section of the rotor 5'. The second metal layer 5b' extends radially through the rotor 5'. The first central plane and the second central plane are at an angle relative to each other. In the present example, the first central plane and the second central plane are perpendicular to each other.

Also in this case, according to one variation the first metal layer 5a' and the second metal layer 5b' are electrically connected. The first metal layer 5a' and the second metal layer 5b' may be short-circuited. Hereto, the first metal layer 5a' and the second metal layer 5b' may be electrically connected to each other by means of one or more low-resistive connection(s). Typically, the first metal layer 5a' and the second metal layer 5b' are connected to each other at each end or end region/portion in the axial direction of the rotor 5. The one or more low-resistive connections may for example be made of the same material as the first metal layer 5a' and/or the second metal layer 5b'.

Fig. 3 shows a comparative example of a slotless synchronous PM motor, which is not covered by the claims.

The slotless synchronous PM motor 1" is of a concentrated winding type. The winding portions connected to the same electrical phase are hence arranged adjacent to each other, as illustrated in the drawing. For example, the two winding portions of phase A, indicated by A+ and A-, are located adjacent to each other and so on.

Also in this case a geometric asymmetry of the stator phase windings may be present. According to some examples, compensation may be provided with regards to this geometric asymmetry, as will be described further below.

The slotless synchronous PM motor 1" comprises a rotor 5" provided with a first metal layer 5a". In particular, the exemplified rotor 5" is provided with only a single metal layer, i.e. the first metal layer 5a". The first metal layer 5a" is provided peripherally on the rotor 5". The first metal layer 5a" forms the arc of a first circle sector 7a" having a central angle $\theta 1$. The central angle $\theta 1$ may beneficially be essentially equal to, equal to or greater than 2n divided by the number of electrical phases. The number of metal layers is equal to the number of pole pairs. Thus, in this example, the central angle $\theta 1$ may be at least $120°$, i.e. $360°/3$, for example $120°$. The first metal layer 5" can thus be fully aligned with the two winding portions of a winding.

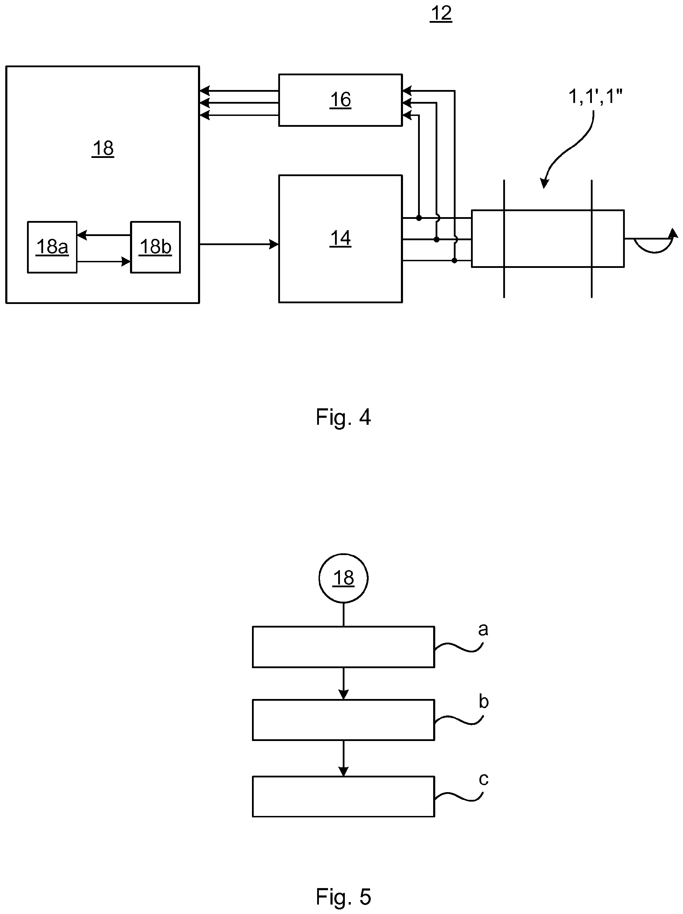

Fig. 4 depicts an example of a slotless synchronous PM motor system 12. The slotless synchronous PM motor system 12 comprises a slotless synchronous PM motor 1, 1', 1", a power converter 14, current sensors 16, and a control system 18.

The power converter 14 is configured to be connected to the windings of the stator 3, 3'. The power converter 14 comprises a plurality of switches or switching devices configured to be controlled to switch with a switching frequency to thereby inject suitable currents into the windings for operating the slotless synchronous PM motor 1, 1', 1". The switches may typically be power electronic switches such as semiconductor switches, e.g. transistors. The switches may for example be wide bandgap power electronic devices, such as silicon carbide or gallium nitride power electronic switches. The switches may be configured in a plurality of different known manners, for example in an H-bridge or half-bridge configuration, or a variation thereof.

The switches of the power converter 14 may for example be controlled by means of PWM. To this end, e.g. the gates of the switches may be controlled to selectively set the switches in an open or closed state based on a control signal that utilises PWM.

The power converter 14 and the current sensors 16 form a driver circuit for the slotless synchronous PM motor 1, 1', 1".

The current sensors 16 are configured to measure currents of the windings of the stator 3, 3'. The current sensors 16 may be configured to measure current, for example current ripple, in a respective electrical phase, i.e. in a respective winding. The current sensors 16 may beneficially have a high bandwidth to enable oversampling of the currents. The bandwidth of the current sensors 16 may preferably be more than twice that of the switching frequency of the switches of the power converter 14. The bandwidth may for example be more than three times, more than four times, more than five times, or more than six times that of the switching frequency.

The control system 18 may be configured to determine the rotor position of the rotor 5, 5', 5" based on the ripple currents measured by the current sensors 16. The control system 18 may comprise a storage medium 18 and processing circuitry 18b. The storage medium 18 comprises computer code or instructions which when executed by the processing circuitry 18b causes the control system 18 to perform the steps of the method as disclosed herein.

The processing circuitry 18b may for example use any combination of one or more of a suitable central processing unit (CPU), multiprocessor, microcontroller, digital signal processor (DSP), application specific integrated circuit (ASIC), field programmable gate arrays (FPGA) etc., capable of executing any herein disclosed operations concerning electrical rotor position determination.

The storage medium 18a may for example be embodied as a memory, such as a random access memory (RAM), a read-only memory (ROM), an erasable programmable read-only memory (EPROM), or an electrically erasable programmable read-only memory (EEPROM) and more particularly as a nonvolatile storage medium of a device in an external memory such as a USB (Universal Serial Bus) memory or a Flash memory, such as a compact Flash memory.

The control system 18 may comprise a controller, which based on the determined rotor position is configured to control the power converter 14. With reference to Fig. 5, the operation of the control system 12 with regards to rotor position determination in the example described in Fig. 4 will now be described in more detail.

In a step a) the controller controls the power converter 14 to inject currents into the windings of the stator. This current control may typically involve switching the switches using PWM as previously mentioned.

Preferably, the switching frequency for controlling the switches of the power converter 14 is sufficiently high for the skin depth $\delta$ in the first metal layer 5a, 5', 5a" and in embodiments comprising the second metal layer 5b, 5'b, to be less than the thickness h of the first metal layer 5a, 5', 5a"/second metal layer 5b, 5'b. This ensures that the high frequency flux pattern generated by the current ripple is blocked by the first metal layer 5a, 5', 5a/second metal layer 5b, 5'b as the rotor 5, 5', 5" rotates, thus affecting the inductance of the electrical phases. In particular, the high frequency flux pattern is blocked as the first metal layer 5a, 5', 5a"/second metal layer 5b, 5'b align(s) with energised winding portions of an electrical phase, causing a sinusoidal or quasi-sinusoidal change in the inductances of the electrical phases in question as the rotor 5, 5', 5" rotates. Specifically, the inductance of an electrical phase decreases as the first metal layer 5a, 5', 5a"/second metal layer 5b, 5'b align(s) with energised winding portions of that electrical phase, i.e. when the high frequency flux pattern is blocked, and increases otherwise. This results in a harmonic rotor saliency enabling rotor position detection without using an angle encoder.

In a step b) the current sensors 16 measure current ripple in the windings of the stator. The current ripple measured in each electrical phase is typically a commutation-induced current ripple, which can be derived from the switching of the switches of the power converter 14. The measured current ripple is obtained by the control system 18.

The inclination or derivative $\frac{dI}{dt}$ of the current ripple between commutations may be determined based on the current ripple measurements. The phase voltage U of each electrical phase may also be measured.

In a step c) the rotor position is determined based on the current ripple by the control system 18. According to the present example, based on the derivative $\frac{dI}{dt}$ of the current ripple for each phase, an inductance L for each phase may be determined by dividing the phase voltage U with the derivative $\frac{dI}{dt}$ of the current ripple, i.e. the inductance $L = U / \frac{dI}{dt}$.

When the inductance L for each electrical phase has been determined, each inductance L may be compared with reference inductances for the corresponding phase in a look-up table. The reference inductances are associated with specific rotor positions, i.e. the set of reference inductances matching the determined inductances provides the rotor position, typically a rotor angle.

The rotor angle can then be used for controlling the power converter by means of the control system 18. Thus, in a step following step c) the power converter may be controlled based on the rotor angle.

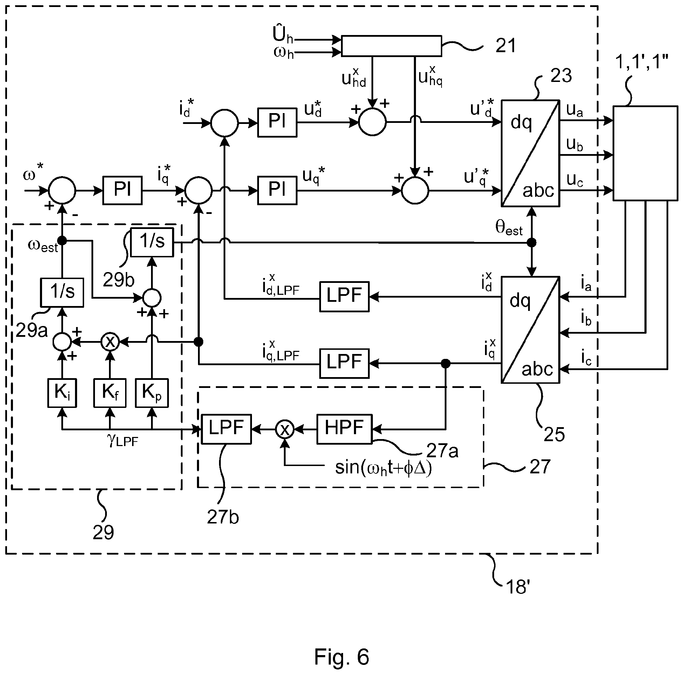

Fig. 6 depicts an example of an alternative control scheme for determining the rotor position. The control scheme shown in Fig. 5 may be implemented as software and/or hardware by the processing circuitry 18b. The power converter 14 and the current sensors 16 are not shown for reasons of simplicity. The exemplified control system 18' comprises a high frequency injection block 21 configured to inject a high frequency voltage component in the d-axis and in the q-axis of the rotor reference frame, or dq-frame. The high frequency voltage components are combined with the voltage references $u_d^*$ and $u_q^*$ to form adjusted voltage references $u_d'^*$ and $u_q'^*$ for the power converter 14. The control system 18' furthermore comprises a first transformation block 23 which is configured to transform the adjusted voltage references $u_d'^*$ and $u_q'^*$ from the rotor reference frame to the three-phase frame or abc-frame to obtain voltages $u_a$, $u_b$, and

$u_c$. The current sensors 16 are configured to measure the currents $i_a$, $i_b$ and $i_c$ of the phases. The control system 18' includes a second transformation block 25 configured to transform the measured currents $i_a$, $i_b$ and $i_c$ to the rotor reference frame.

The exemplified control system 18' furthermore comprises a demodulator block 27 configured to demodulate the measured q-axis current. The demodulator block 27 includes a high pass filter block 27a configured to high pass filter the q-axis current to obtain a high frequency component, with an angular frequency $\omega_h$ being that of the injected high frequency voltage component utilised by the high frequency injection block 21, of the q-axis current. The high pass filtered q-axis current is then combined by multiplication with a sinusoidal signal with the frequency $\omega_h$. The demodulator block 27 may further comprise a low pass filter block 27b configured to low pass filter the combined signal to obtain a dc-signal.

The exemplified control system 18' comprises an estimator block 29 which includes a PI-observer. The dc-signal is input to the estimator block 29 for PI-processing. The PI-observer uses feed-forward of the dc-signal. Hereto, the estimator block comprises a feed-forward coefficient $k_f$, which is multiplied with the dc-signal in addition to the dc-signal being multiplied with an integrating coefficient $k_i$ and a proportionality constant $k_p$. The dc-signal which has been multiplied with the feed-forward coefficient $k_f$ is combined with a low-pass filtered measured q-axis current. This combined signal is added to the dc-signal multiplied with the integrating coefficient $k_i$, which is integrated in a first integration block 29a of the estimator block 29 to obtain an estimated rotor speed $\omega_{est}$. The estimated rotor speed $\omega_{est}$ is used to obtain a rotor speed error to obtain a q-axis current reference $i_q^*$. Additionally, the estimated rotor speed $\omega_{est}$ is combined with a multiplication of the dc-signal and the proportionality constant $k_p$, which combination is integrated in a second integrator block 29b of the estimator block 29 to obtain the estimated rotor position $\theta_{est}$. The estimated rotor position $\theta_{est}$ is provided to the first transformation block 23 and the second transformation block for controlling the transformations between the rotor reference frame and the abc-frame, and hence for controlling the power converter 14.

The method described with reference to Fig. 6 is hence similar to the method described with reference to Fig. 5, in general steps a)-c) but without measuring and utilising the current ripple and determining inductances, and instead injecting a high-frequency voltage component and measuring the phase currents and processing these in the exemplified control scheme.

In some examples, the geometric asymmetry of the stator phase windings may be compensated. The control system 18, 18' may hence be configured to compensate for a geometric asymmetry of the stator phase windings. In particular, the control system 18, 18' may comprise a first transformation block configured to perform rotor reference frame to abc-frame transformations. The first transformation block may be configured to perform the compensation by utilising a transformation of voltage references for the power converter 14 from the rotor reference frame to the three-phase or abc-frame. The same compensation may also be provided in a second transformation block configured to perform abc-frame to rotor reference frame transformations.

The transformation between the rotor reference frame and the abc-frame may be configured to take displacement of the stator phase windings in the circumferential direction of the stator or angular displacement, defining the geometric asymmetry, into account. The transformation between the different frames is typically performed by a rotation matrix. The rotation matrix, and in particular the arguments of the cosine and sine functions, may comprise respective components which are related to the angular displacement of the stator phase windings.

In all of the examples provided herein, the rotor is received by the stator. However, as an alternative to any of these examples the inverse configuration is also possible, where the rotor is arranged around the stator, a so-called outer rotor machine.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A slotless synchronous permanent magnet, PM, motor (1; 1') comprising:

   a rotor (5), and
   a stator (3) configured to electromagnetically interact with the rotor (5),
   wherein the rotor (5) is provided with a first conductive metal layer (5a) configured to create harmonic rotor saliency, wherein in cross-section of the rotor (5) the first metal layer (5a) is provided peripherally on the rotor, forming an arc of a first circle sector (7a), the rotor being further provided with a second conductive metal layer (5b) configured to create harmonic rotor saliency, wherein in cross-section of the rotor (5) the second metal layer (5b) is provided peripherally on the rotor, forming an arc of a second circle sector (7b),
   the centre of the arc of the second circle sector being at an angle ($\alpha$) with respect to the centre of the arc of the first circle sector, and wherein the first conductive metal layer and the second conductive metal layer are electrically connected to each other at each end portion or end of the rotor in an axial direction, hereby an inductance of an electrical phase decreases as the first metal layer (5a) and second metal layer (5b) aligns with energised winding portions of that electrical phase, resulting in a harmonic rotor saliency enabling rotor position detection without using an angle encoder.

2. The slotless synchronous PM motor (1; 1') as claimed in claim 1, wherein the first metal layer (5a; 5a'; 5a") is made of copper or aluminium.

3. The slotless synchronous PM motor (1; 1') as claimed in claim 1 or 2, wherein the angle ($\alpha$) is about 180°.

4. The slotless synchronous PM motor (1; 1') as claimed in any of claims 1 to 3, wherein the first metal layer (5a') is arranged between magnet segments (10a-10d) of the rotor (5') to form a first central plane of the rotor (5'), and the second metal layer (5b') is arranged between magnet segments (10a-10d) of the rotor (5') to form a second central plane of the rotor (5'), perpendicular to the first central plane.

5. The slotless synchronous PM motor (1; 1') as claimed in any of the preceding claims, wherein the first metal layer (5a; 5a') extends along a majority of the axial length of the rotor (5; 5').

6. A slotless synchronous PM motor system (12) comprising: a slotless synchronous PM motor (1; 1') as claimed in any of claims 1-5, a power converter (14) configured to inject a current or voltage into the synchronous PM motor (1; 1'), current sensors (16) configured to measure a current in the synchronous PM motor (1; 1') generated due to the current or voltage injected by the power converter (14), and a control system (18) configured to determine a rotor position based on the current measured by the current sensors (16).

7. The slotless synchronous PM motor system (12) as claimed in claim 6, wherein the power converter (14) is configured to inject current to the synchronous PM motor (1; 1') using a switching frequency of switches of the power converter (14) sufficiently high for the skin depth $\delta$ in the first metal layer (5a; 5a') to be less than the thickness h of the first metal layer (5a; 5a'), the skin depth being defined by

$$\delta = \sqrt{\frac{2\rho}{\mu \pi f}}$$

where $\rho$ is the resistivity of the first metal layer (5a; 5a'), $\mu$ is the permeability of the first metal layer (5a;

5a'), and f is the switching frequency.

8. The slotless synchronous PM motor system (12) as claimed in claim 6 or 7, wherein the control system (18) is configured to determine an inductance for each electric phase based on a current ripple of the measured current, and wherein the control system (18) is configured to determine the rotor position based on the inductances.

9. The slotless synchronous PM motor system (12) as claimed in claim 8, wherein the rotor position is determined by comparing the inductances with reference inductances associated with specific rotor positions in a look-up table.

10. The slotless synchronous PM motor system (12) as claimed in any of claims 6-9, wherein the current sensors (16) are configured to oversample a current ripple of the measured current.

11. The slotless synchronous PM motor system (12) as claimed in any of claims 6-10, wherein the stator (3) has a plurality of stator phase windings, and wherein the control system (18; 18') is configured to compensate for a geometric asymmetry of the stator phase windings.

12. The slotless synchronous PM motor system (12) as claimed in claim 11, wherein the control system (18; 18') comprises a first transformation block (23) configured to perform the compensation by utilising a transformation of voltage references for the power converter (14) from a rotor reference frame to a three-phase frame, the transformation taking displacement of the stator phase windings in the circumferential direction of the stator (3), defining the geometric asymmetry, into account.

13. The slotless synchronous PM motor system (12) as claimed in claim 6 or 7 or claim 11 or 12, wherein the control system (18') includes a second transformation block (25) configured to transform the current measured by the current sensors (16) to obtain a d-axis current and a q-axis current, a demodulator block (27) configured to demodulate the q-axis current, and an estimator block (29) including a PI-observer, configured to use feed-forward of the demodulated q-axis current, for determining the rotor position.

14. A method of determining a rotor position of a rotor of a slotless synchronous PM motor (1; 1') according to any of claims 1-5, wherein the method comprises:

 a) controlling a power converter (14) to inject a current or voltage into the slotless synchronous PM motor (1; 1');

b) obtaining current measured in the slotless synchronous PM motor (1; 1') generated due to the injected current or voltage, and

c) determining a rotor position based on the current.

15. The method as claimed in claim 14, wherein the controlling involves using a switching frequency of switches of the power converter (14) sufficiently high for the skin depth $\delta$ in the first metal layer (5a; 5a') to be less than the thickness h of the first metal layer (5a; 5a'), the skin depth being defined by

$$\delta = \sqrt{\frac{2\rho}{\mu\pi f}}$$

where $\rho$ is the resistivity of the first metal layer, $\mu$ is the permeability of the first metal layer (5a; 5a'), and f is the switching frequency.

16. The method as claimed in claim 15, wherein the stator (3) has a plurality of stator phase windings, and wherein step a) involves compensating for a geometric asymmetry of the stator phase windings.

17. The method as claimed in 16, wherein the compensating involves utilising a transformation of voltage references for the power converter (14) from a rotor reference frame to a three-phase frame, the transformation taking displacement of the stator phase windings in the circumferential direction of the stator (3), defining the geometric asymmetry, into account.

18. The method as claimed in claim 14 or claim 16-17, wherein the determining involves transforming the measured current to obtain a d-axis current and a q-axis current, demodulating the q-axis current, and utilising an estimator block including a PI-observer, using feed-forward of the demodulated q-axis current.

**Patentansprüche**

1. Schlitzloser synchroner Permanentmagnet(PM)-Motor (1; 1'), der Folgendes umfasst:

einen Rotor (5), und
einen Stator (3), der konfiguriert ist, um mit dem Rotor (5) elektromagnetisch zusammenzuwirken,
wobei der Rotor (5) mit einer ersten leitfähigen Metallschicht (5a) versehen ist, die konfiguriert ist, um eine harmonische Rotorausprägung zu erzeugen, wobei in einem Querschnitt des Rotors (5) die erste Metallschicht (5a) an dem Rotor peripher bereitgestellt ist und einen Bogen eines ersten Kreissektors (7a) ausbildet, wobei der Rotor ferner mit einer zweiten leitfähigen Metallschicht (5b) versehen ist, die konfiguriert ist, um eine harmonische Rotorausprägung zu erzeugen, wobei in dem Querschnitt des Rotors (5) die zweite Metallschicht (5b) an dem Rotor peripher bereitgestellt ist und einen Bogen eines zweiten Kreissektors (7b) ausbildet, wobei die Mitte des Bogens des zweiten Kreissektors in einem Winkel ($\alpha$) hinsichtlich der Mitte des Bogens des ersten Kreissektors liegt, und wobei die erste leitfähige Metallschicht und die zweite leitfähige Metallschicht an jedem Endabschnitt oder jedem Ende des Rotors in einer axialen Richtung elektrisch miteinander verbunden sind, wodurch eine Induktivität einer elektrischen Phase abnimmt, wenn sich die erste Metallschicht (5a) und die zweite Metallschicht (5b) an erregten Wicklungsabschnitten dieser elektrischen Phase ausrichten, was zu einer harmonischen Rotorausprägung führt, die eine Rotorpositionserfassung ohne ein Verwenden eines Winkelcodierers ermöglicht.

2. Schlitzloser synchroner PM-Motor (1; 1') nach Anspruch 1, wobei die erste Metallschicht (5a; 5a'; 5a") aus Kupfer oder Aluminium besteht.

3. Schlitzloser synchroner PM-Motor (1; 1') nach Anspruch 1 oder 2, wobei der Winkel ($\alpha$) etwa 180° beträgt.

4. Schlitzloser synchroner PM-Motor (1; 1') nach einem der Ansprüche 1 bis 3, wobei die erste Metallschicht (5a') zwischen Magnetsegmenten (10a-10d) des Rotors (5') angeordnet ist, um eine erste mittige Ebene des Rotors (5') auszubilden, und die zweite Metallschicht (5b') zwischen Magnetsegmenten (10a-10d) des Rotors (5') angeordnet ist, um eine zweite mittige Ebene des Rotors (5') auszubilden, die senkrecht zu der ersten mittigen Ebene verläuft.

5. Schlitzloser synchroner PM-Motor (1; 1') nach einem der vorhergehenden Ansprüche, wobei sich die erste Metallschicht (5a; 5a') entlang eines Großteils der axialen Länge des Rotors (5; 5') erstreckt.

6. System des schlitzlosen synchronen PM-Motors (12), das Folgendes umfasst:

einen schlitzlosen synchronen PM-Motor (1; 1') nach einem der Ansprüche 1-5,
einen Leistungswandler (14), der konfiguriert ist, um einen Strom oder eine Spannung in den synchronen PM-Motor (1; 1') zu injizieren, Stromsensoren (16), die konfiguriert sind, um einen Strom in dem synchronen PM-Motor (1; 1') zu messen, der aufgrund des Stroms oder der Spannung hergestellt wird, die durch den Leistungswandler (14) injiziert werden, und

ein Steuersystem (18), das konfiguriert ist, um eine Rotorposition basierend auf dem Strom, der durch die Stromsensoren (16) gemessen wird, zu bestimmen.

7. System des schlitzlosen synchronen PM-Motors (12) nach Anspruch 6, wobei der Leistungswandler (14) konfiguriert ist, um Strom in den synchronen PM-Motor unter Verwendung einer Schaltfrequenz von Schaltern des Leistungswandlers (14) zu injizieren, die ausreichend hoch ist, dass die Hauttiefe δ in der ersten Metallschicht (5a; 5a') kleiner als die Dicke h der ersten Metallschicht (5a; 5a') ist, wobei die Hauttiefe durch Folgendes definiert ist:

$$\delta = \sqrt{\frac{2\rho}{\mu\pi f}}$$

wobei $\rho$ die Resistivität der ersten Metallschicht (5a; 5a') ist, $\mu$ die Permeabilität der ersten Metallschicht (5a; 5a') ist und f die Schaltfrequenz ist.

8. System des schlitzlosen synchronen PM-Motors (12) nach Anspruch 6 oder 7, wobei das Steuersystem (18) konfiguriert ist, um eine Induktivität für jede elektrische Phase basierend auf einer Stromwelligkeit des gemessenen Stroms zu bestimmen, und wobei das Steuersystem (18) konfiguriert ist, um die Rotorposition basierend auf den Induktivitäten zu bestimmen.

9. System des schlitzlosen synchronen PM-Motors (12) nach Anspruch 8, wobei die Rotorposition durch Vergleichen der Induktivitäten mit Referenzinduktivitäten bestimmt wird, die spezifischen Rotorpositionen in einer Nachschlagetabelle zugehörig sind.

10. System des schlitzlosen synchronen PM-Motors (12) nach einem der Ansprüche 6-9, wobei die Stromsensoren (16) konfiguriert sind, um eine Stromwelligkeit des gemessenen Stroms überabzutasten.

11. System des schlitzlosen synchronen PM-Motors (12) nach einem der Ansprüche 6-10, wobei der Stator (3) mehrere Statorphasenwicklungen aufweist und wobei das Steuersystem (18; 18') konfiguriert ist, um eine geometrische Asymmetrie der Statorphasenwicklungen auszugleichen.

12. System des schlitzlosen synchronen PM-Motors (12) nach Anspruch 11, wobei das Steuersystem (18; 18') einen ersten Transformationsblock (23) umfasst, der konfiguriert ist, um den Ausgleich durch Nutzen einer Transformation von Spannungsreferenzen für den Leistungswandler (14) von einem Rotorreferenzrahmen zu einem Dreiphasenrahmen durchzuführen, wobei die Transformation eine Verschiebung der Statorphasenwicklungen in der Umfangsrichtung des Stators (3), die die geometrische Asymmetrie definiert, berücksichtigt.

13. System des schlitzlosen synchronen PM-Motors (12) nach Anspruch 6 oder 7 oder 11 oder 12, wobei das Steuersystem (18') einen zweiten Transformationsblock (25), der konfiguriert ist, um den Strom, der durch die Stromsensoren (16) gemessen wird, zu transformieren, um einen d-Achsen-Strom und einen q-Achsen-Strom zu erhalten, einen Demodulatorblock (27), der konfiguriert ist, um den q-Achsen-Strom zu demodulieren, und einen Schätzblock (29) beinhaltet, der einen PI-Beobachter beinhaltet, der konfiguriert ist, um eine Vorsteuerung des demodulierten q-Achsen-Stroms zum Bestimmen der Rotorposition zu verwenden.

14. Verfahren zum Bestimmen einer Rotorposition eines Rotors eines schlitzlosen synchronen PM-Motors (1; 1') nach einem der Ansprüche 1-5, wobei das Verfahren Folgendes umfasst:

    a) Steuern eines Leistungswandlers (14), um einen Strom oder eine Spannung in den schlitzlosen synchronen PM-Motor (1; 1') zu injizieren;
    b) Erhalten von Strom, der in dem schlitzlosen synchronen PM-Motor (1; 1') gemessen wird, der aufgrund des injizierten Stroms oder der injizierten Spannung hergestellt wird, und
    c) Bestimmen einer Rotorposition basierend auf dem Strom.

15. Verfahren nach Anspruch 14, wobei das Steuern das Verwenden einer Schaltfrequenz von Schaltern des Leistungswandlers (14) beinhaltet, die ausreichend hoch ist, dass die Hauttiefe δ in der ersten Metallschicht (5a; 5a') kleiner als die Dicke h der ersten Metallschicht (5a; 5a') ist, wobei die Hauttiefe durch Folgendes definiert ist:

$$\delta = \sqrt{\frac{2\rho}{\mu\pi f}}$$

wobei $\rho$ die Resistivität der ersten Metallschicht ist, $\mu$ die Permeabilität der ersten Metallschicht (5a; 5a') ist und f die Schaltfrequenz ist.

16. Verfahren nach Anspruch 15, wobei der Stator (3) mehrere Statorphasenwicklungen aufweist und wobei Schritt a) das Ausgleichen einer geometrischen Asymmetrie der Statorphasenwicklungen einschließt.

**17.** Verfahren nach Anspruch 16, wobei das Ausgleichen das Nutzen einer Transformation von Spannungsreferenzen für den Leistungswandler (14) von einem Rotorreferenzrahmen zu einem Dreiphasenrahmen einschließt, wobei die Transformation die Verschiebung der Statorphasenwicklungen in der Umfangsrichtung des Stators (3), die die geometrische Asymmetrie definiert, berücksichtigt.

**18.** Verfahren nach Anspruch 14 oder 16-17, wobei das Bestimmen ein Transformieren des gemessenen Stroms, um einen d-Achsen-Strom und einen q-Achsen-Strom zu erhalten, ein Demodulieren des q-Achsen-Stroms und das Nutzen eines Schätzblocks, der einen PI-Beobachter beinhaltet, unter Verwendung der Vorsteuerung des demodulierten q-Achsen-Stroms einschließt.

**Revendications**

**1.** Moteur à aimant permanent, PM, synchrone sans fente, (1 ; 1') comprenant :

un rotor (5), et
un stator (3) configuré pour interagir électromagnétiquement avec le rotor (5),
le rotor (5) étant fourni avec une première couche métallique conductrice (5a) configurée pour créer une saillance harmonique du rotor, dans la coupe transversale du rotor (5), la première couche métallique (5a) étant fournie à la périphérie sur le rotor, formant un arc d'un premier secteur de cercle (7a), le rotor étant en outre fourni avec une seconde couche métallique conductrice (5b) configurée pour créer une saillance harmonique du rotor, dans la coupe transversale du rotor (5), la seconde couche métallique (5b) étant fournie périphériquement sur le rotor, formant un arc d'un second secteur de cercle (7b), le centre de l'arc du second secteur de cercle étant à un angle ($\alpha$) par rapport au centre de l'arc du premier secteur de cercle, et la première couche métallique conductrice et la seconde couche métallique conductrice étant connectées électriquement l'une à l'autre à chaque partie d'extrémité ou à l'extrémité du rotor dans une direction axiale, ainsi une inductance d'une phase électrique diminuant lorsque la première couche métallique (5a) et la seconde couche métallique (5b) s'alignent avec les parties d'enroulement excitées de cette phase électrique, donnant pour résultat une saillance harmonique du rotor permettant la détection de la position du rotor sans l'aide d'un codeur angulaire.

**2.** Moteur PM synchrone sans fente (1 ; 1') selon la revendication 1, dans lequel la première couche métallique (5a ; 5a' ; 5a") est en cuivre ou en aluminium.

**3.** Moteur PM synchrone sans fente (1 ; 1') selon la revendication 1 ou 2, dans lequel l'angle ($\alpha$) est d'environ 180 °.

**4.** Moteur PM synchrone sans fente (1 ; 1') selon l'une quelconque des revendications 1 à 3, dans lequel la première couche métallique (5a') est disposée entre les segments d'aimant (10a-10d) du rotor (5') pour former un premier plan central du rotor (5'), et la seconde couche métallique (5b') est disposée entre les segments magnétiques (10a-10d) du rotor (5') pour former un second plan central du rotor (5'), perpendiculaire au premier plan central.

**5.** Moteur PM synchrone sans fente (1 ; 1') selon l'une quelconque des revendications précédentes, dans lequel la première couche métallique (5a ; 5a') s'étend le long d'une majorité de la longueur axiale du rotor (5 ; 5').

**6.** Système de moteur PM synchrone sans fente (12) comprenant :

un moteur PM synchrone sans fente (1 ; 1') selon l'une quelconque des revendications 1 à 5,
un convertisseur de puissance (14) configuré pour injecter un courant ou une tension dans les capteurs de courant (16) du moteur PM synchrone (1 ; 1') configurés pour mesurer un courant dans le moteur PM synchrone (1 ; 1') généré en raison du courant injecté ou de la tension injectée par le convertisseur de puissance (14), et
un système de commande (18) configuré pour déterminer une position de rotor en fonction du courant mesuré par les capteurs de courant (16).

**7.** Système de moteur PM synchrone sans fente (12) selon la revendication 6, dans lequel le convertisseur de puissance (14) est configuré pour injecter du courant au moteur PM synchrone (1 ; 1') à l'aide d'une fréquence de commutation des commutateurs du convertisseur de puissance (14) suffisamment élevée pour la profondeur de peau $\delta$ dans la première couche métallique (5a ; 5a') qui doit être inférieure à l'épaisseur h de la première couche métallique (5a ; 5a'), la profondeur de peau étant définie par

$$\delta = \sqrt{\frac{2\rho}{\mu\pi f}}$$

où $\rho$ est la résistivité de la première couche métallique (5a ; 5a'), $\mu$ est la perméabilité de la première couche métallique (5a ; 5a') et f est la fréquence de commutation.

8. Système de moteur PM synchrone sans fente (12) selon la revendication 6 ou 7, dans lequel le système de commande (18) est configuré pour déterminer une inductance pour chaque phase électrique en fonction d'une ondulation de courant du courant mesuré, et le système de commande (18) étant configuré pour déterminer la position du rotor en fonction des inductances.

9. Système de moteur PM synchrone sans fente (12) selon la revendication 8, dans lequel la position du rotor est déterminée en comparant les inductances à des inductances de référence associées à des positions spécifiques du rotor dans une table de recherche.

10. Système de moteur PM synchrone sans fente (12) selon l'une quelconque des revendications 6 à 9, dans lequel les capteurs de courant (16) sont configurés pour suréchantillonner une ondulation de courant du courant mesuré.

11. Système de moteur PM synchrone sans fente (12) selon l'une quelconque des revendications 6 à 10, dans lequel le stator (3) a une pluralité d'enroulements de phase de stator, et le système de commande (18 ; 18') étant configuré pour compenser une asymétrie géométrique des enroulements de phase du stator.

12. Système de moteur PM synchrone sans fente (12) selon la revendication 11, dans lequel le système de commande (18 ; 18') comprend un premier bloc de transformation (23) configuré pour effectuer la compensation en utilisant une transformation de références de tension pour le convertisseur de puissance (14) d'un référentiel rotor à un référentiel triphasé, la transformation prenant en compte le déplacement des enroulements de phase du stator dans la direction circonférentielle du stator (3), définissant l'asymétrie géométrique.

13. Système de moteur PM synchrone sans fente (12) selon la revendication 6 ou 7 ou la revendication 11 ou 12, dans lequel le système de commande (18') comporte un second bloc de transformation (25) configuré pour transformer le courant mesuré par les capteurs de courant (16) afin d'obtenir un courant d'axe d et un courant d'axe q, un bloc démodulateur (27) configuré pour démoduler le courant d'axe q, et un bloc estimateur (29) comportant un observateur PI, configuré pour utiliser un couplage vers l'avant du courant d'axe q démodulé, pour déterminer la position du rotor.

14. Procédé de détermination d'une position de rotor d'un rotor d'un moteur PM synchrone sans fente (1 ; 1') selon l'une quelconque des revendications 1 à 5, dans lequel le procédé comprend :

   a) la commande d'un convertisseur de puissance (14) pour injecter un courant ou une tension dans le moteur PM synchrone sans fente (1 ; 1') ;
   b) l'obtention du courant mesuré dans le moteur PM synchrone sans fente (1 ; 1') généré en raison du courant injecté ou de la tension injectée, et
   c) la détermination d'une position du rotor en fonction du courant.

15. Procédé selon la revendication 14, dans lequel la commande implique l'utilisation d'une fréquence de commutation de commutateurs du convertisseur de puissance (14) suffisamment élevée pour que la profondeur de peau δ dans la première couche métallique (5a ; 5a') soit inférieure à l'épaisseur h de la première couche métallique (5a ; 5a'), la profondeur de peau étant définie par

$$\delta = \sqrt{\frac{2\rho}{\mu\pi f}}$$

où ρ est la résistivité de la première couche métallique, μ est la perméabilité de la première couche métallique (5a ; 5a') et f est la fréquence de commutation.

16. Procédé selon la revendication 15, dans lequel le stator (3) a une pluralité d'enroulements de phase de stator, et l'étape a) impliquant la compensation d'une asymétrie géométrique des enroulements de phase de stator.

17. Procédé selon la revendication 16, dans lequel la compensation implique l'utilisation d'une transformation de références de tension pour le convertisseur de puissance (14) d'un référentiel de référence de rotor en un référentiel triphasé, la transformation prenant en compte le déplacement des enroulements de phase du stator dans la direction circonférentielle du stator (3), définissant l'asymétrie géométrique.

18. Procédé selon la revendication 14 ou les revendications 16 à 17, dans lequel la détermination implique la transformation du courant mesuré pour obtenir un courant d'axe d et un courant d'axe q, la démodulation du courant d'axe q et l'utilisation d'un bloc d'estimation comportant un observateur PI, à l'aide du couplage vers l'avant du courant de l'axe q démodulé.

Fig. 1a

Fig. 1b

Fig. 2

Fig. 3

12

18

18a ← 18b

16

14

1,1',1"

**Fig. 4**

18

a

b

c

**Fig. 5**

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016105064 A

- EP 2571142 A

**Non-patent literature cited in the description**

- **TOMITA et al.** Sensorless Estimation of Rotor Position of Cylindrical Brushless DC Motors Using Eddy Currents. *Proceedings of 4th IEEE International Workshop on Advanced Motion Control - AMC '96 -MIE,* March 1996, vol. 1, 24-28